# EUROPEAN PATENT APPLICATION

(11) **EP 4 277 137 A1**
(43) Date of publication of application: **15.11.2023**
(21) Application number: 22763482.1
(22) Date of filing: 10.02.2022
(51) Int. Cl.: H04B 1/3827, H04B 17/10, G06F 1/3296

(54) **METHOD AND ELECTRONIC DEVICE FOR REGULATING RADIATED POWER**

(30) Priority: 04.03.2021 KR 20210029005
(71) Applicant: Samsung Electronics Co., Ltd., Suwon-si, Gyeonggi-do 16677 (KR)
(72) Inventor: JEON, Gyuyeon, Suwon-si, Gyeonggi-do 16677 (KR); YUN, Yongsang, Suwon-si, Gyeonggi-do 16677 (KR); YOON, Hyunjoong, Suwon-si, Gyeonggi-do 16677 (KR)
(74) Representative: Gulde & Partner
(86) International application number: PCT/KR2022/002044
(87) International publication number: WO 2022/186497

(57) **Abstract**

According to various embodiments, an electronic device may comprise: a communication module that identifies an environment for communication with an external electronic device, and radiates a signal via an antenna; a grip sensor; a memory; and a processor operatively connected to the communication module, the grip sensor, and the memory. The processor may: identify the environment for communication with the external electronic device, or an intensity of radiated power via the antenna; compare the identified intensity of radiated power and a configured threshold value; and, according to the result of the comparison, regulate power supplied to the grip sensor. Other various embodiments may be possible.

## Description

### [Technical Field]

Various embodiments of the present disclosure are related to a method and an electronic device for regulating radiated power.

### [Background Art]

In general, when an electronic device is used to make calls, and a user holds the handset close to the ear and mouth. In this case, since electromagnetic waves generated by the electronic device may affect the user's health, each country has established a specific absorption rate (hereinafter referred to as SAR) of electromagnetic waves standard to define allowable intensity of electromagnetic waves from the electronic device.

With the development of wireless communication technology, performance of an antenna has been further improved, and the intensity of power supplied to the antenna may be increased to provide the user with an environment for communication that is faster. The electronic device may determine the intensity of radiated power supplied to the antenna under the condition that the specific absorption rate standard for electromagnetic waves is met.

The electronic device may supply power to the antenna to have maximum radiation performance while complying with the specific absorption rate standard for electromagnetic waves.

### [Disclosure of Invention]

### [Technical Problem]

An electronic device may regulate a power value (e.g., radiated power) supplied to an antenna to meet a specific absorption rate standard (SAR) for electromagnetic waves in a wireless communication. The electronic device may determine the radiated power based on one reference value to meet the SAR. Typically, when the electronic device performs the wireless communication, the radiated power may be increased to increase strength of a communication signal in case that a quality of the communication signal (e.g., an environment for communication) is poor, and the radiated power may be regulated to meet the SAR in response to an approach of a human body. When the electronic device performs the wireless communication, the radiated power may be reduced to reduce the strength of the communication signal in case that the quality of the communication signal (the environment for communication) is good, and the radiated power may be regulated to meet the SAR in response to the approach of the human body.

The electronic device may identify whether a user is approaching, based on one reference value (e.g., a distance of the electronic device (antenna) from the user), regardless of the intensity of the radiated power, and, when the user is approaching, may regulate the radiated power to meet the SAR. The electronic device may continuously operate a grip sensor to determine whether the user is approaching, and consume power in response to the operation of the grip sensor. Since the electronic device supplies power to the grip sensor regardless of a state of the environment for communication, an unnecessary supply of power and unnecessary current consumption due to the supply of power may occur.

Various embodiments of the present disclosure may provide the electronic device to operate the grip sensor in a low power mode, and reduce the radiated power in case that the quality of the communication signal is good.

### [Solution to Problem]

According to various embodiments, an electronic device may include a communication module that radiates a signal through an antenna, a grip sensor, a memory, and a processor operatively connected to the communication module, the grip sensor, and the memory. The processor may identify an environment for communication with an external electronic device or intensity of radiated power through the antenna, compare the identified intensity of radiated power and a configured threshold value, and regulate power supplied to the grip sensor according to the result of the comparison.

A method according to various embodiment includes: identifying an environment for communication with an external electronic device or intensity of radiated power through the antenna; comparing the identified intensity of radiated power and a configured threshold value; and regulating power supplied to the grip sensor according to the result of the comparison.

### [Advantageous Effects of Invention]

In various embodiments of the present invention, the grip sensor may be operated in a low power mode in case that the radiated power is below a configured threshold (e.g., in a strong electric field situation) while meeting the SAR standard, thereby solving problems of unnecessary power consumption and/or unwanted wave interference with other constituent elements. According to an embodiment, as the grip sensor operates in a low power mode, power supplied to the grip sensor may be reduced, and a problem of unnecessary power consumption may be reduced.

In various embodiments of the present disclosure, the grip sensor may be operated in a high power mode in case that the radiated power is higher than a configured threshold value (e.g., in a weak field situation), and intensity of the radiated power may be increased to better detect the approach of the human body. According to an embodiment, an approach detection rate to the human body may be improved. In addition, various effects that can be directly or indirectly identified through the present document may be provided.

### [Brief Description of Drawings]

In connection with the description of the drawings, the same or similar reference numerals may be used for the same or similar components.
FIG. 1 is a block diagram of an electronic device in a network environment according to various embodiments of the present disclosure.
FIG. 2 is an exemplified view illustrating a communication situation between an electronic device and a base station, according to various embodiments of the present disclosure.
FIG. 3 is a block diagram illustrating the electronic device according to various embodiments of the present invention.
FIG. 4 is a flowchart illustrating a method of regulating radiated power according to various embodiments of the present disclosure.
FIG. 5 is a flowchart illustrating a method of operating a grip sensor in case that a communication state is good, according to various embodiments of the present disclosure.
FIG. 6 is a flowchart illustrating a method of operating a grip sensor in case that a communication state is poor, according to various embodiments of the present disclosure.
FIG. 7 is an exemplified view illustrating an operation of the grip sensor in a low power mode in case that the communication state is good, according to various embodiments of the present disclosure.
FIG. 8 is an exemplified view illustrating an operation of the grip sensor in a high power mode when the communication state is poor, according to various embodiments of the present disclosure.

### [Mode for the Invention]

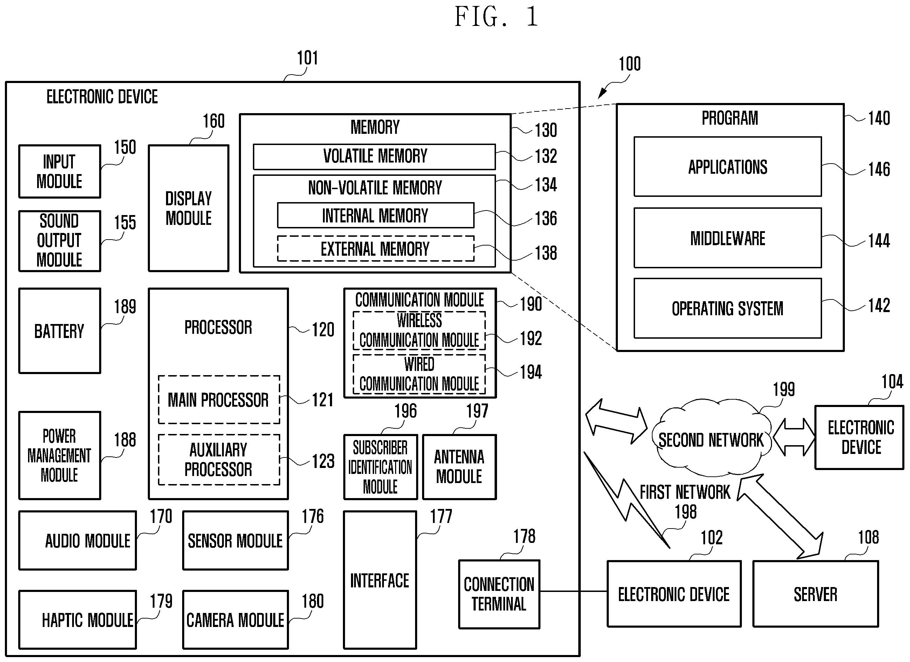

FIG. 1 illustrates an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, an audio output module 155, a display module 160, an audio module 170, a sensor module 176, an interface 177, a connecting terminal 178, a haptic module 179, a camera module 180, a power management module 188, a battery 189, a communication module 190, a subscriber identity module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 or external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record. The receiver may be used for receiving incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the audio output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or a standard of the Infrared Data Association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. The antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

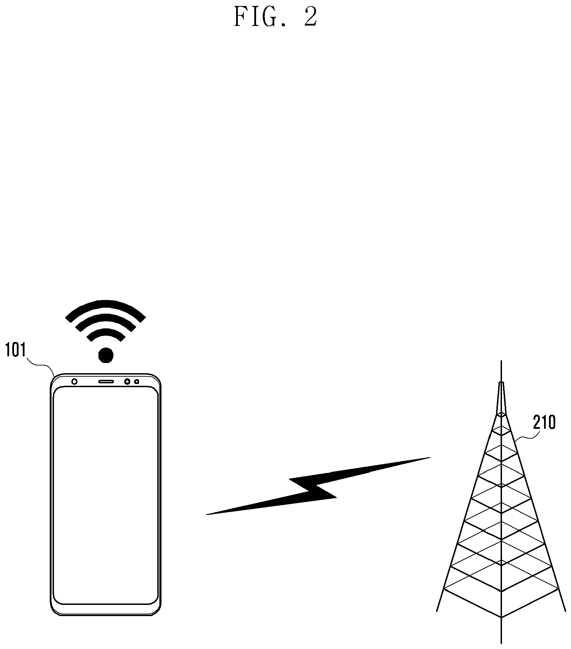

FIG. 2 is an exemplified view illustrating a communication situation between an electronic device and a base station, according to various embodiments of the present disclosure.

With the development of communication technology, the electronic device 101 may perform more data processing at a higher rate and at a higher speed in a wireless communication. For example, the electronic device 101 may configure radiated power to a higher level to improve a quality of a communication signal. The electronic device 101 may increase the radiated power in order to transmit large amounts of wireless data, and may transmit the communication signal corresponding to the radiated power to a base station 210 and/or a server through an antenna.

According to an embodiment, the electronic device 101 may regulate the radiated power supplied to the antenna under a condition of meeting a specific absorption rate standard (SAR) for electromagnetic waves. According to an embodiment, the electronic device 101 may increase the radiated power to facilitate the wireless communication in case that the quality of the communication signal is poor (e.g., in a weak electric field situation) in a situation where the electronic device 101 is in wireless communication with the base station. According to an embodiment, the electronic device 101 may detect an approach of a user and, when the user approaches, may regulate the radiated power based on the specific absorption rate standard (SAR) of electromagnetic waves. For example, the electronic device 101 may regulate the radiated power while not exceeding the specific absorption rate standard for electromagnetic waves.

According to an embodiment, the electronic device 101 may reduce the radiated power relatively in case that the quality of the communication signal is good (e.g., in a strong electric field situation) in the situation where the electronic device 101 is in wireless communication with the base station. According to an embodiment, the electronic device 101 may be in a state where the reduced radiated power meets the specific absorption rate standard (SAR) for electromagnetic waves.

According to an embodiment, the electronic device 101 may configure a threshold value for changing an operation mode (e.g., low power mode, high power mode) for a grip sensor. According to an embodiment, the electronic device 101 may operate the grip sensor in one of the low power mode and/or the high power mode based on the configured threshold value.

According to an embodiment, the electronic device 101 may operate the grip sensor in a low power mode in case that the radiated power is below the configured threshold value in a state where the quality of the communication signal is good (e.g., in a strong electric field situation). For example, the grip sensor in the low power mode may include a grip sensor in an inactive state that is not powered. According to an embodiment, in the state where the quality of the communication signal is good, the electronic device 101 may reduce the radiated power and may be in a state where the SAR is met. For example, the electronic device 101 in the state where the SAR is met may have the radiated power configure to be low, regardless of whether the user is approaching. The electronic device 101 may change the grip sensor for detecting whether the user is approaching to the low power mode. According to an embodiment, as the grip sensor operates in the low power mode, unnecessary power consumption may be reduced and unwanted wave interference with at least one of component elements may be reduced.

According to an embodiment, the electronic device 101 may operate the grip sensor in a high power mode in case that the radiated power is above the configured threshold value in a state where the quality of the communication signal is poor (e.g., in a weak electric field situation). For example, the grip sensor in the high power mode may maximize the radiated power and improve performance (e.g., sensitivity) of the grip sensor. According to an embodiment, as the grip sensor operates in the high power mode, the approach of the user may be more accurately detected, and an area over which the user is detected may be expanded. According to an embodiment, the electronic device 101 may regulate the radiated power based on the specific absorption rate standard (SAR) of electromagnetic waves when the electronic device 101 detects the approach of the user while operating the grip sensor in the high power mode.

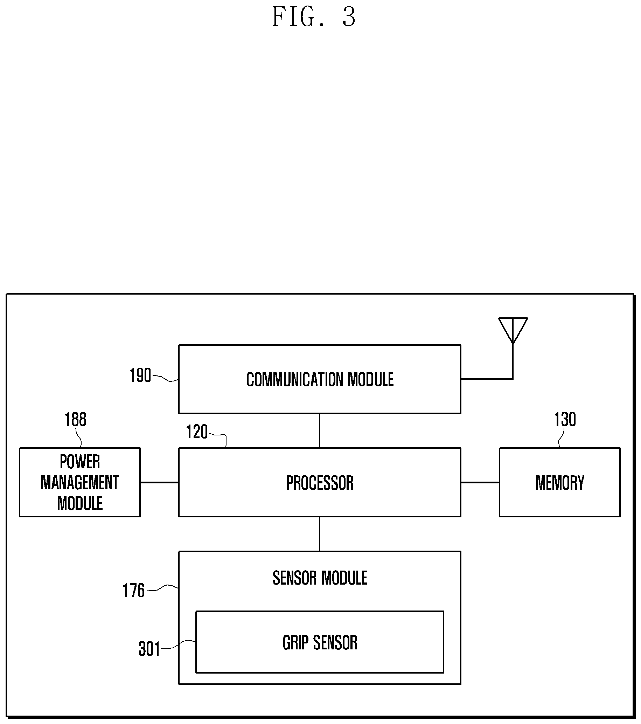

FIG. 3 is a block diagram illustrating the electronic device according to various embodiments of the present invention.

With reference to FIG. 3, the electronic device (e.g., the electronic device 101 in FIG. 1) may include a processor (e.g., the processor 120 in FIG. 1), a memory (e.g., the memory 130 in FIG. 1), a sensor module (e.g., the sensor module 176 in FIG. 1), a power management module (e.g., the power management module 188 in FIG. 1), and/or a communication module (e.g., the communication module 190 in FIG. 1). The sensor module 176 may include a grip sensor 301.

According to an embodiment, the electronic device 101 may perform the wireless communication with the base station (e.g., the base station 210 of FIG. 2) through the communication module 190, and may regulate the radiated power based on the quality of the communication signal. For example, in case that the quality of the communication signal is poor (e.g., in a weak electric field), the electronic device 101 may configure the radiated power relatively high to increase strength of the communication signal. The electronic device 101 may operate the grip sensor in the high power mode. For example, in case that the quality of the communication signal is good (e.g., in a strong electric field), the electronic device 101 may configure the radiated power relatively low to reduce the strength of the communication signal. The electronic device 101 may operate the grip sensor in the low power mode. In a strong electric field, the wireless communication may be performed smoothly, even if the strength of the communication signal is low. According to an embodiment, the electronic device 101 may regulate the radiated power under the condition of meeting the specific absorption rate standard (SAR) for electromagnetic waves.

According to an embodiment, the electronic device 101 may configure a threshold value for determining an operating mode for the grip sensor 301. According to an embodiment, in case that the quality of the communication signal is good (e.g., in a strong electric field situation), the electronic device 101 may configure the radiated power low, and in case that the radiated power value is below the configured threshold value, the grip sensor 301 may change to the low power mode. The electronic device 101 may reduce an amount of power supplied to the grip sensor 301. For example, the configured threshold value may be a radiated power value that meets the specific absorption rate standard (SAR) for electromagnetic waves. According to another embodiment, the grip sensor 301 operating in the low power mode may be in a state where only minimal power is supplied, and may include an off state where the grip sensor 301 is turned off. According to an embodiment, in case that the quality of the communication signal is poor (e.g., in a weak electric field situation), the electronic device 101 may configure the radiated power high, and in case that the radiated power value is above the configured threshold value, the grip sensor 301 may change to the high power mode. The electronic device 101 may increase the amount of power supplied to the grip sensor 301 to maximize sensing performance of the grip sensor 301. The grip sensor 301 in the high power mode may maximize performance in detecting whether the user is approaching and gripping the electronic device 101. According to an embodiment, when the electronic device 101 detects the approach of the user, using the grip sensor 301 in the high power mode, the electronic device 101 may regulate the radiated power value to a level that meets the specific absorption rate standard (SAR) for electromagnetic waves.

The processor 120 may execute a program stored in the memory 130 (e.g., the program 140 of FIG. 1) to control at least one other component element (e.g., a hardware or software component element), and may perform various data processing or computations. For example, the processor 120 may identify the quality of the communication signal through the communication module 190, and may determine the radiated power value based on the quality of the communication signal. The processor 120 may supply the radiated power to the communication module 190 and the grip sensor 301 through the power management module 188.

The memory 130 may store data for determining the radiated power value, based on the quality of the communication signal. The memory 130 may store the radiated power value that meets the specific absorption rate standard (SAR) for electromagnetic waves. The memory 130 may store a threshold value that is configured to change the operation mode for the grip sensor 301.

The sensor module 176 may include the grip sensor 301 for detecting whether the user is approaching or gripping the electronic device 101. For example, the grip sensor 301 may be in a state of being operatively connected to an antenna of the electronic device 101 and may use the antenna to detect whether the user is approaching or gripping the electronic device 101. For example, the grip sensor 301 may input and output waveforms for detecting the human body through the antenna or conductive pattern. When the human body approaches the antenna, the input and output waveforms will change, and the grip sensor 301 may detect the change. According to an embodiment, the processor 120 may use the grip sensor 301 to detect whether the user is gripping the electronic device 101. According to another embodiment, the grip sensor 301 of the sensor module 176 may also distinguish and detect whether the user is gripping the electronic device 101 in landscape mode, portrait mode, or in contact with the face for making a call. According to an embodiment, the grip sensor 301 may also variously configure grip sensitivity to the electronic device 101. According to an embodiment, the processor 120 may use the grip sensor 301 to identify a gripping state of the user (e.g., a gripping method for making a call, and/or a gripping method for searching for contents) and regulate the radiated power value supplied to the grip sensor 301 under the condition of meeting the specific absorption rate standard (SAR) for electromagnetic waves.

The power management module 188 may provide the radiated power to the grip sensor 301 included in the communication module 190 and the sensor module 176. According to an embodiment, the processor 120 may use the power management module 188 to configure the radiated power supplied to the communication module 190 high, which may increase the strength of the communication signal. According to an embodiment, the processor 120 may use the power management module 188 to configure the radiated power supplied to the grip sensor 301 high, thereby increasing grip sensitivity through the grip sensor 301. For example, when high radiated power is applied to the grip sensor 301 (e.g., when the grip sensor 301 is operated in the high power mode), sensing performance using the grip sensor 301 may be improved. According to another embodiment, the processor 120 may use the power management module 188 to configure the radiated power supplied to the grip sensor 301 low, and may operate the grip sensor 301 in the low power mode or an inactive state. For example, the processor 120 may operate the grip sensor 301 in the low power mode, thereby reducing power consumption in the grip sensor 301.

The communication module 190 may perform the wireless communication with the base station 210. According to an embodiment, the processor 120 may supply the radiated power to the communication module 190 through the power management module 188, and may perform the wireless communication with the base station 210 through the communication module 190. The processor 120 may identify whether the quality of the communication signal is good (e.g., a strong electric field) or poor (e.g., a weak electric field), through the communication module 190. According to an embodiment, the processor 120 may regulate the intensity of the radiated power to be relatively low in case that the quality of the communication signal is good, and may regulate the intensity of the radiated power to be relatively high in case that the quality of the communication signal is poor.

According to an embodiment, the processor 120 of the electronic device 101 may identify whether the communication state is a good state (e.g., strong electric field) or a poor state (e.g., weak electric field). The processor 120 may identify a threshold value that is configured to determine the operation mode for the grip sensor 301. For example, the threshold value may be a configured value corresponding to a value of the radiated power applied to the antenna through the power management module 188.

According to an embodiment, the processor 120 may change the grip sensor 301 to the low power mode in case that the radiated power value, which is indicative of the quality of the communication signal, is below the configured threshold value. For example, in case that the quality of the communication signal is good (e.g., a strong electric field), the processor 120 may reduce the radiated power value, and in case that the radiated power value falls below the threshold value, the processor 120 may change the grip sensor 301 to the low power mode. For example, a state in which the radiated power value falls below the threshold value includes a state in which the SAR is met, and the processor 120 may change the grip sensor 301 to the low power mode because the SAR is being met, regardless of whether the user is approaching. According to another embodiment, the processor 120 may change the grip sensor 301 to an inactive state. According to an embodiment, the processor 120 may reduce unnecessary power consumption due to activation of the grip sensor 301 and may increase power efficiency for the electronic device 101.

According to an embodiment, the processor 120 may change the grip sensor 301 to the high power mode in case that the radiated power value, which is indicative of the quality of the communication signal, is above the configured threshold value. For example, in case that the quality of the communication signal is poor (e.g., weak electric field), the processor 120 may increase the radiated power value and change the grip sensor 301 to the high power mode, thereby increasing sensing performance for whether the user is approaching or gripping the electronic device 101. For example, a state in which the radiated power value exceeds the threshold value includes a state in which the SAR is not met, and the processor 120 may maximize sensing performance of the grip sensor 301 to detect whether the user is approaching. According to an embodiment, while the grip sensor 301 is operating in the high power mode, the processor 120 may detect the approach of the user, or a gripping operation on the electronic device 101, and may regulate the radiated power value based on the SAR (e.g., specific absorption rate standard for electromagnetic waves).

According to various embodiments, an electronic device 101 may include a communication module 190 that radiates a signal through an antenna, a grip sensor 301, a memory 130, and a processor 120 operatively connected to the communication module 190, the grip sensor 301, and the memory 130. The processor 120 may identify the environment for communication with the external electronic device, or an intensity of radiated power via the antenna; compare the identified intensity of radiated power and a configured threshold value; and, according to the result of the comparison, regulate power supplied to the grip sensor 301.

According to an embodiment, the processor 120 may operate the grip sensor 301 in the low power mode in case that the intensity of the radiated power is below the configured threshold value.

According to an embodiment, the grip sensor 301 in the low power mode may operate in at least one method of a method of configuring a period of a sensing waveform longer, a method of configuring a frequency of the sensing waveform lower, a method of configuring a gain of the sensing waveform smaller, or a method of powering off the grip sensor.

According to an embodiment, the processor 120 may shut off interrupts and/or data communication connected to the grip sensor 301 when the grip sensor 301 is operating in the low power mode, and/or may stop processing data for at least one of the constituent elements.

According to an embodiment, the processor 120 may shut off output power to at least one of a low dropout (LDO) regulator and a power management integrated circuit (PMIC) that supply power to the grip sensor 301 when the grip sensor 301 is operating in the low power mode.

According to an embodiment, the processor 120 may operate the grip sensor 301 in the high power mode in case that the intensity of the radiated power is above the configured threshold value.

According to an embodiment, the grip sensor 301 in the high power mode may operate in at least one method of a method of configuring a period of a sensing waveform shorter, a method of configuring a frequency of the sensing waveform higher, or a method of configuring a gain of the sensing waveform greater.

According to an embodiment, the processor 120 may detect a grip on the electronic device 101 through the grip sensor 301 while the grip sensor 301 is operating in the high power mode, and may regulate the power supplied to the antenna based on the specific absorption rate standard (SAR) of electromagnetic waves.

According to an embodiment, the configured threshold value includes a first threshold value and a second threshold value that is configured to a value greater than the first threshold value, and the processor 120 may operate the grip sensor 301 in the first high power mode in case that the intensity of the radiated power exceeds the first threshold value and operate the grip sensor 301 in the second high power mode in case that the intensity of the radiated power exceeds the second threshold value.

According to an embodiment, the grip sensor 301 operating in the second high power mode has relatively higher sensitivity to the grip than the grip sensor 301 operating in the first high power mode.

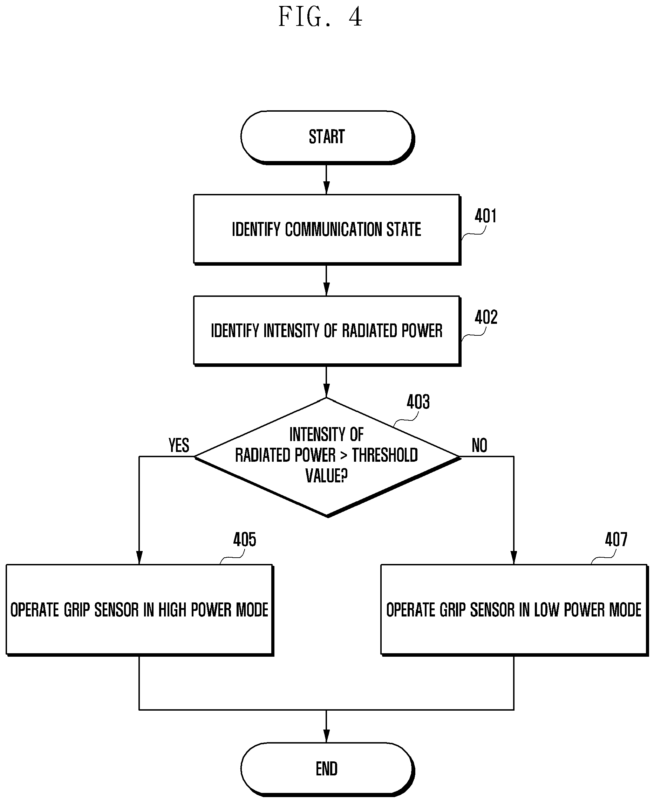

FIG. 4 is a flowchart illustrating a method of regulating radiated power according to various embodiments of the present disclosure.

According to an embodiment, the processor (e.g., the processor 120 in FIG. 1) of the electronic device (e.g., the electronic device 101 in FIG. 1) may configure a threshold value for determining an operation mode for the grip sensor (e.g., the grip sensor 301 in FIG. 3). For example, the threshold value may be a configured value corresponding to the radiated power value, which indicates the quality of the communication signal. According to an embodiment, the processor 120 may change the grip sensor 301 to the low power mode in case that the radiated power value, which is indicative of the quality of the communication signal, is equal to or less than the threshold value (e.g., a strong electric field situation), and may change the grip sensor 301 to the high power mode in case that the radiated power value is equal to or greater than the threshold value (e.g., a weak electric field situation). According to an embodiment, the electronic device 101 may compare the radiated power value indicative of the quality of the communication signal with the configured threshold value, and may change an operation mode (e.g., low power mode, high power mode) for the grip sensor 301 based on the result of the comparison.

In operation 401, the processor 120 may identify a communication situation with an external electronic device (e.g., a base station) via a communication module (e.g., the communication module 190 of FIG. 1). For example, the processor 120 may determine whether the current communication state is a strong electric field situation or a weak electric field situation. According to an embodiment, in a strong electric field situation, the processor 120 may perform the wireless communication by relatively reducing the radiated power, and in a weak electric field situation, the processor 120 may perform the wireless communication by relatively increasing the radiated power.

In operation 402, the processor 120 may identify the intensity of the radiated power through the antenna of the communication module 190. For example, the intensity of the radiated power may be data that indicates the quality of the communication signal. According to an embodiment, in case that the quality of the communication signal is good (e.g., in a strong electric field situation), the processor 120 may reduce the intensity of the radiated power when performing the wireless communication. In contrast, in case that the quality of the communication signal is poor (e.g., in a weak electric field situation), the processor 120 may increase the intensity of the radiated power when performing the wireless communication. According to an embodiment, identifying the intensity of the radiated power may be substantially equivalent to identifying the quality of the current communication signal. According to an embodiment, the processor 120 may identify a communication situation in operation 401 and/or identify the intensity of the radiated power in operation 402. The processor 120 may perform operation 401 and operation 402 substantially simultaneously, or may execute operation 402 to identify the communication situation according to operation 401.

In operation 403, the processor 120 may identify whether the intensity of the identified radiated power exceeds the configured threshold value. For example, the threshold value may be a preconfigured value, which may be a reference value for determining whether to operate the grip sensor 301 in the high power mode or in the low power mode.

In operation 403, in case that the intensity of the radiated power exceeds the threshold value (e.g., in a weak electric field situation), in operation 405, the processor 120 may maximize sensing performance for the grip sensor 301. For example, the processor 120 may operate the grip sensor 301 in the high power mode. According to an embodiment, the processor 120 may relatively increase a radiated power value applied to the communication module (e.g., communication module 190 in FIG. 1) and the grip sensor 301. According to an embodiment, the grip sensor 301 in the high power mode may have increased sensitivity for detecting whether to grip the electronic device 101. According to an embodiment, the grip sensor 301 in the high power mode may operate in at least one method of a method of configuring a period of a sensing waveform (e.g., a waveform input to and output from the grip sensor 301 for sensing the human body) shorter, a method of configuring a frequency of the sensing waveform higher, or a method of configuring a gain of the sensing waveform greater. According to an embodiment, the processor 120 may regulate the radiated power value to meet the SAR (e.g., specific absorption rate standard for electromagnetic waves) when the processor 120 detects the user's grip through the grip sensor 301. For example, when the radiated power value is higher than a SAR reference value, the radiated power value may be reduced to the SAR reference value or less.

In operation 403, in case that the intensity of the radiated power is equal to or less than the threshold value (e.g., in a strong electric field situation), in operation 407, the processor 120 may operate the grip sensor 301 in the low power mode. According to an embodiment, the processor 120 may relatively reduce the radiated power value applied to the communication module (e.g., communication module 190 in FIG. 1) and the grip sensor 301. For example, the processor 120 may provide minimum power to the grip sensor 301. According to an embodiment, the grip sensor 301 in the low power mode may operate in at least one method of a method of configuring a period of a sensing waveform (e.g., a waveform input to and output from the grip sensor 301 for sensing the human body) longer, a method of configuring a frequency of the sensing waveform lower, or a method of configuring a gain of the sensing waveform smaller. According to another embodiment, the processor 120 may shut off interrupts and/or data communication connected to the grip sensor 301, and may stop unnecessary data processing for the at least one of the constituent elements. According to another embodiment, when the grip sensor 301 is operating in the low power mode, the processor 120 may shut off the radiated power applied to the grip sensor 301. For example, the processor 120 may shut off (e.g., turn off) output power to at least one of the low dropout (LDO) regulator and/or power management integrated circuit (PMIC) that supply power to the grip sensor 301. According to an embodiment, the electronic device 101 may reduce power unnecessarily consumed by at least one of the constituent elements (e.g., the grip sensor), thereby increasing power efficiency for the electronic device 101.

According to an embodiment, in a state where the quality of the communication signal is good (e.g., in a strong field state, where the intensity of the radiated power is equal to or less than the threshold value), the electronic device 101 may reduce the radiated power, and may be in a state that the SAR is met. For example, the electronic device 101 in the state where the SAR is met may have the radiated power configure to be low, regardless of whether the user is approaching. For example, the electronic device 101 may not need to drive the grip sensor 301 when the SAR is met. The electronic device 101 may change the grip sensor for detecting whether the user is approaching to the low power mode. According to an embodiment, as the grip sensor operates in the low power mode, unnecessary power consumption may be reduced and unwanted wave interference with at least one of component elements may be reduced.

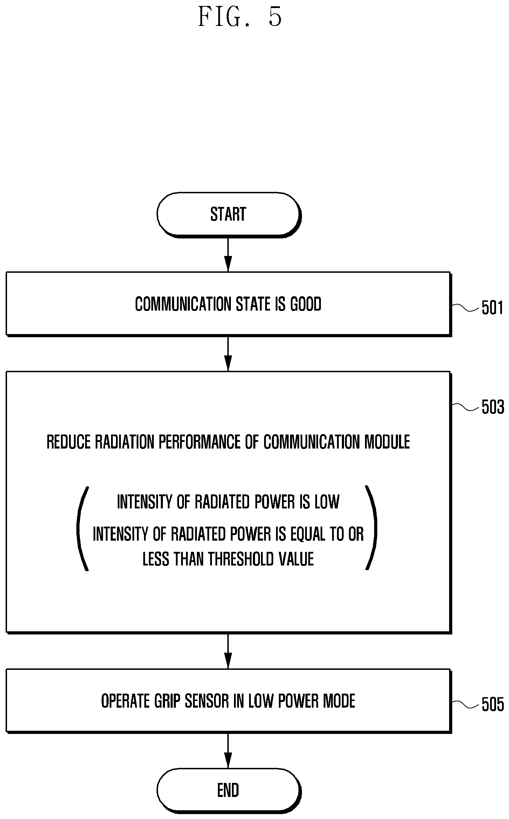

FIG. 5 is a flowchart illustrating a method of operating a grip sensor in case that a communication state is good, according to various embodiments of the present disclosure.

In operation 501, the processor (e.g., the processor 120 in FIG. 1) of the electronic device (e.g., the electronic device 101 in FIG. 1) may identify, through the communication module (e.g., the communication module 190 in FIG. 1), that the communication state is in a good state (e.g., a strong electric field situation). This may mean that the quality of the communication signal is good.

In operation 503, the processor 120 may reduce radiation performance of the communication module 190. For example, the processor 120 may reduce the intensity of the radiated power applied to the communication module 190, and may identify that the intensity of the radiated power is equal to or less than the configured threshold value.

In operation 505, the processor 120 may operate the grip sensor (e.g., the grip sensor 301 in FIG. 3) in the low power mode. According to an embodiment, the grip sensor 301 in the low power mode may operate in at least one method of a method of configuring a period of a sensing waveform (e.g., a waveform input to and output from the grip sensor 301 for sensing the human body) longer, a method of configuring a frequency of the sensing waveform lower, or a method of configuring a gain of the sensing waveform smaller. According to another embodiment, the processor 120 may shut off interrupts and/or data communication connected to the grip sensor 301, and may stop unnecessary data processing for the at least one of the constituent elements. According to another embodiment, when the grip sensor 301 is operating in the low power mode, the processor 120 may shut off the radiated power applied to the grip sensor 301. For example, the processor 120 may turn off output power to the low dropout (LDO) regulator and/or power management integrated circuit (PMIC) that supplies power to the grip sensor 301. According to an embodiment, the processor 120 may reduce unnecessary power consumption of the grip sensor 301 and may increase power efficiency for the electronic device 101.

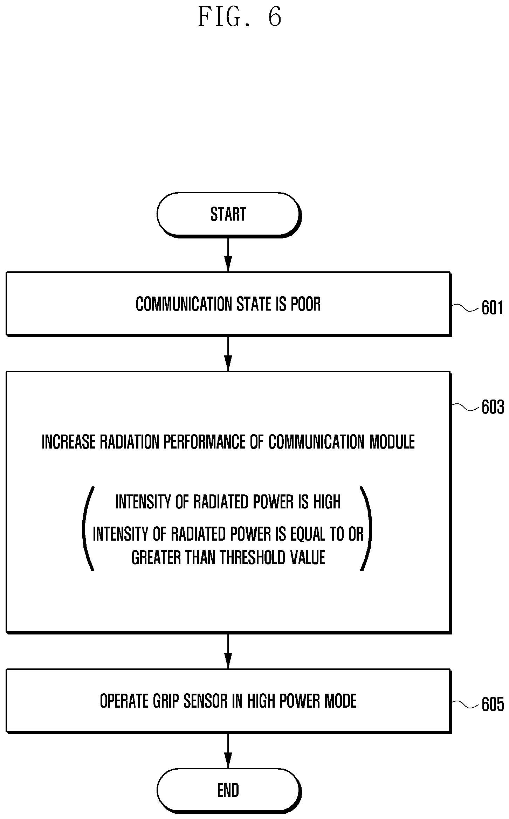

FIG. 6 is a flowchart illustrating a method of operating a grip sensor in case that a communication state is poor, according to various embodiments of the present disclosure.

In operation 601, the processor (e.g., the processor 120 in FIG. 1) of the electronic device (e.g., the electronic device 101 in FIG. 1) may identify, through the communication module (e.g., the communication module 190 in FIG. 1), that the communication state is in a poor state (e.g., a weak electric field situation). This may mean that the quality of the communication signal is poor.

In operation 603, the processor 120 may increase radiation performance of the communication module 190. For example, the processor 120 may increase the intensity of the radiated power applied to the communication module 190, and may identify that the intensity of the radiated power is equal to or greater than the configured threshold value.

In operation 605, the processor 120 may supply the radiated power (e.g., radiated power with relatively increased intensity) to the grip sensor (e.g., the grip sensor 301 in FIG. 3) to maximize sensing performance for the grip sensor 301. The processor 120 may operate the grip sensor 301 in the high power mode. According to an embodiment, the grip sensor 301 in the high power mode may operate in at least one method of a method of configuring a period of a sensing waveform (e.g., a waveform input to and output from the grip sensor 301 for sensing the human body) shorter, a method of configuring a frequency of the sensing waveform higher, or a method of configuring a gain of the sensing waveform greater. According to an embodiment, the processor 120 may maximize sensing performance for the grip sensor 301.

According to an embodiment, while operating the grip sensor 301 in the high power mode, the processor 120 may regulate the radiated power value to a level that meets the SAR (e.g., specific absorption rate standard for electromagnetic waves) when the processor 120 detects the grip on the electronic device 101.

According to an embodiment, the processor 120 may configure a plurality of threshold values (e.g., the first threshold value and/or the second threshold value, the second threshold value being configure to a value greater than the first threshold value), and may operate in the first high power mode in case that the radiated power exceeds the first threshold value, and may operate in the second high power mode in case that the radiated power exceeds the second threshold value. According to an embodiment, the grip sensor 301 may have relatively higher sensitivity to the grip sensor 301 when operating in the second high power mode rather than the first high power mode. For example, having high sensitivity may mean having excellent grip sensing performance for the electronic device 101.

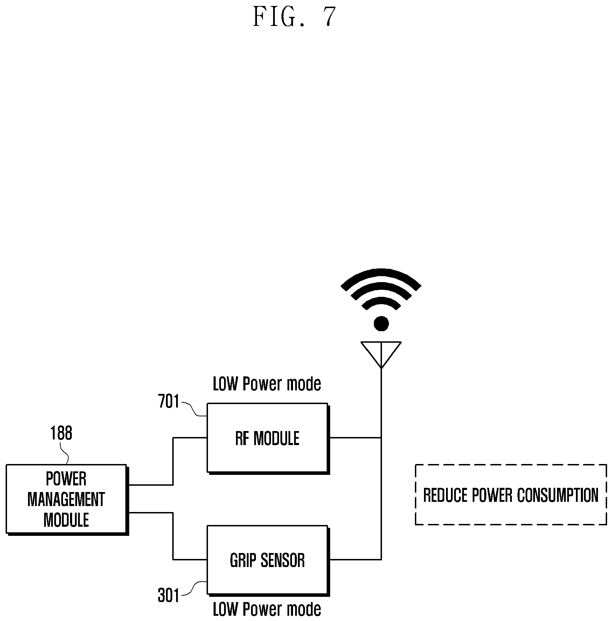

FIG. 7 is an exemplified view illustrating an operation of the grip sensor in a low power mode in case that the communication state is good, according to various embodiments of the present disclosure.

With reference to FIG. 7, the power management module (e.g., the power management module 188 in FIG. 1) may be operatively connected to, and may provide the radiated power to, a RF module 701 included in the communication module (e.g., the communication module 190 in FIG. 1) and the grip sensor (e.g., the grip sensor 301 in FIG. 3).

According to an embodiment, the processor (e.g., the processor 120 in FIG. 1) of the electronic device (e.g., the electronic device 101 in FIG. 1) may identify, through the communication module (e.g., the communication module 190 in FIG. 1), that the communication state is in a good state (e.g., a strong electric field). This may mean that the quality of the communication signal is good. In case that the communication state is in good state, the processor 120 may operate the RF module 701 and the grip sensor 301 in the low power mode (e.g., low power mode) and may regulate the intensity of the radiated power applied from the power management module 188 to be low. According to an embodiment, the electronic device 101 may reduce power unnecessarily consumed by at least one of the constituent elements (e.g., the RF module 701 and the grip sensor 301), and increase power efficiency for the electronic device 101.

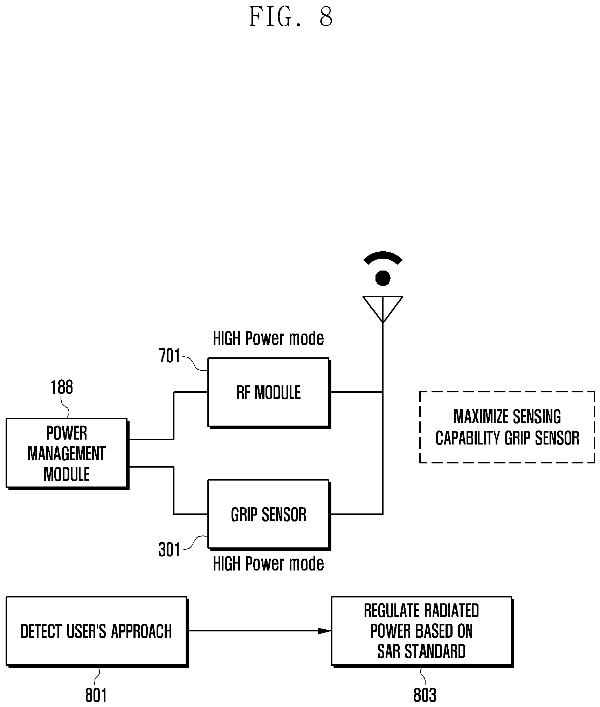

FIG. 8 is an exemplified view illustrating an operation of the grip sensor in a high power mode in case that the communication state is poor, according to various embodiments of the present disclosure.

Referring to FIG. 8, the power management module (e.g., the power management module 188 in FIG. 1) may be operatively connected to, and may provide the radiated power to, a RF module 701 included in the communication module (e.g., the communication module 190 in FIG. 1) and the grip sensor (e.g., the grip sensor 301 in FIG. 3).

According to an embodiment, the processor (e.g., the processor 120 in FIG. 1) of the electronic device (e.g., the electronic device 101 in FIG. 1) may identify, through the communication module (e.g., the communication module 190 in FIG. 1), that the communication state is in a poor state (e.g., a weak electric field). This may mean that the quality of the communication signal is poor. When the communication state is in poor state, the processor 120 may operate the RF module 701 and the grip sensor 301 in the high power mode (e.g., high power mode) and may regulate the intensity of the radiated power applied from the power management module 188 to be high. The processor 120 may maximize sensing capability of the grip sensor 301. According to an embodiment, the electronic device 101 may maximize the sensing capability of the grip sensor 301 when the communication state is poor, thereby improving sensitivity to the electronic device 101.

While the grip sensor 301 is operating in the high power mode, in operation 801, when the grip sensor 301 is used to detect whether the user is approaching or gripping the electronic device 101, in operation 803, the processor 120 may regulate the radiated power value to meet the SAR (e.g., specific absorption rate standard for electromagnetic waves). For example, when the radiated power value in the high power mode is configured higher than the SAR reference value, the processor 120 may reduce the radiated power value to be equal to or less than the SAR reference value.

A method according to various embodiment includes: identifying an environment for communication with an external electronic device or intensity of radiated power through an antenna; comparing the identified intensity of radiated power and a configured threshold value; and regulating power supplied to a grip sensor (e.g., the grip sensor 301 in FIG. 3) according to the result of the comparison.

The method according to an embodiment may further include performing the grip sensor 301 in a low power mode when the intensity of the radiated power is equal to or less than the configured threshold value.

According to an embodiment, the grip sensor 301 in the low power mode may operate in at least one method of a method of configuring a period of a sensing waveform longer, a method of configuring a frequency of the sensing waveform lower, a method of configuring a gain of the sensing waveform smaller, or a method of powering off the grip sensor.

The method according to an embodiment may further include shutting off interrupts and/or data communication connected to the grip sensor 301 when the grip sensor 301 is operating in the low power mode, or stopping processing data for at least one of constituent elements.

The method according to an embodiment may further include shutting off output power to at least one of a low dropout (LDO) regulator and a power management integrated circuit (PMIC) that supply power to the grip sensor 301 when the grip sensor 301 is operating in the low power mode.

The method according to an embodiment may further include performing the grip sensor 301 in a high power mode in case that the intensity of the radiated power exceeds the configured threshold value.

According to an embodiment, the grip sensor 301 in the high power mode may operate in at least one method of a method of configuring a period of a sensing waveform shorter, a method of configuring a frequency of the sensing waveform higher, or a method of configuring a gain of the sensing waveform greater.

The method according to an embodiment may further include detecting a grip on the electronic device (e.g., the electronic device 101 in FIG. 1) through the grip sensor 301 while the grip sensor 301 is operating in the high power mode, and regulating the power supplied to the antenna based on a specific absorption rate standard (SAR) of electromagnetic waves.

According to an embodiment, the configured threshold value includes a first threshold value and a second threshold value that is configured to a value greater than the first threshold value, and the method may further include performing the grip sensor 301 in the first high power mode in case that the intensity of the radiated power exceeds the first threshold value and performing the grip sensor 301 in the second high power mode in case that the intensity of the radiated power exceeds the second threshold value.

According to an embodiment, the grip sensor 301 operating in the second high power mode has relatively higher sensitivity to the grip than the grip sensor 301 operating in the first high power mode.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication module configured to radiate a signal through an antenna;
a grip sensor;
a memory; and
a processor operatively connected to the communication module, the grip sensor, and the memory,
wherein the processor:
identifies an environment for communication with an external electronic device or intensity of radiated power through the antenna;
compares the identified intensity of the radiated power with a configured threshold value; and
regulates power supplied to the grip sensor based on the result of the comparison.

2. The electronic device of claim 1, wherein the processor operates the grip sensor in a low power mode in case that the intensity of the radiated power is equal to or less than the configured threshold, and the grip sensor in the low power mode operates at least one method of a method of configuring a period of a sensing waveform longer, a method of configuring a frequency of the sensing waveform lower, a method of configuring a gain of the sensing waveform smaller, or a method of powering off the grip sensor.

3. The electronic device of claim 2, wherein the processor shuts off interrupts and/or data communication connected to the grip sensor when the grip sensor is operating in the low power mode, and/or stops processing data for at least one of constituent elements.

4. The electronic device of claim 2, wherein the processor shuts off output power to at least one of a low dropout (LDO) regulator and a power management integrated circuit (PMIC) that supply power to the grip sensor when the grip sensor is operating in the low power mode.

5. The electronic device of claim 1, wherein the processor operates the grip sensor in a high power mode in case that the intensity of the radiated power exceeds the configured threshold, and the grip sensor in the high power mode operates at least one method of a method of configuring a period of a sensing waveform shorter, a method of configuring a frequency of the sensing waveform higher, or a method of configuring a gain of the sensing waveform greater.

6. The electronic device of claim 5, wherein the processor detects a grip on the electronic device through the grip sensor while the grip sensor is operating in the high power mode, and regulates power supplied to the antenna based on a specific absorption rate standard (SAR) of electromagnetic waves.

7. The electronic device of claim 5, wherein the configured threshold value comprises:
a first threshold value; and
a second threshold value that is configured to a value greater than the first threshold value, and
wherein the processor operates the grip sensor in the first high power mode in case that the intensity of the radiated power exceeds the first threshold value and operates the grip sensor in the second high power mode in case that the intensity of the radiated power exceeds the second threshold value.

8. The electronic device of claim 7, wherein the grip sensor operating in the second high power mode has relatively higher sensitivity to a grip than the grip sensor operating in the first high power mode.

9. A method comprising:
identifying an environment for communication with an external electronic device or intensity of radiated power through an antenna;
comparing the identified intensity of the radiated power and a configured threshold value; and
regulating power supplied to a grip sensor according to the result of the comparison.

10. The method of claim 9, further comprising:
performing the grip sensor in a low power mode in case that the intensity of the radiated power is equal to or less than the configured threshold, and
wherein the grip sensor in the low power mode operates at least one method of a method of configuring a period of a sensing waveform longer, a method of configuring a frequency of the sensing waveform lower, a method of configuring a gain of the sensing waveform smaller, or a method of powering off the grip sensor.

11. The method of claim 10, further comprising:
shutting off interrupts and/or data communication connected to the grip sensor when the grip sensor is operating in the low power mode; and/or
stopping processing data for at least one of constituent elements.

12. The method of claim 10, further comprising:
shutting off output power to at least one of a low dropout (LDO) regulator and a power management integrated circuit (PMIC) that supply power to the grip sensor when the grip sensor is operating in the low power mode.

13. The method of claim 9, further comprising:
performing the grip sensor in a high power mode in case that the intensity of the radiated power exceeds the configured threshold, and
wherein the grip sensor in the high power mode operates at least one method of a method of configuring a period of a sensing waveform shorter, a method of configuring a frequency of the sensing waveform higher, or a method of configuring a gain of the sensing waveform greater.

14. The method of claim 13, further comprising:
detecting a grip on the electronic device through the grip sensor while the grip sensor is operating in the high power mode; and
regulating power supplied to the antenna based on a specific absorption rate standard (SAR) of electromagnetic waves.

15. The method of claim 13, wherein the configured threshold value comprises:
a first threshold value; and
a second threshold value that is configured to a value greater than the first threshold value, and
wherein the method further comprises:
performing the grip sensor in the first high power mode in case that the intensity of the radiated power exceeds the first threshold value; and
performing the grip sensor in the second high power mode in case that the intensity of the radiated power exceeds the second threshold value.
